# EUROPEAN PATENT APPLICATION

(11) **EP 4 641 481 A1**
(43) Date of publication of application: **29.10.2025**
(21) Application number: 25169213.3
(22) Date of filing: 08.04.2025
(51) Int. Cl.: G06Q 90/00

(54) **SYSTEM AND METHOD FOR PREDICTING EMERGENCY EVACUATION MOVEMENTS IN A FACILITY**

(30) Priority: 23.04.2024 US 202418643706
(71) Applicant: Honeywell International Inc., Charlotte, NC 28202 (US)
(72) Inventor: A, Ramkumar, Charlotte 28202 (US); Kirupakaran, Prabakar, Charlotte 28202 (US); S, Ashokkumar, Charlotte 28202 (US)
(74) Representative: Haseltine Lake Kempner LLP

(57) **Abstract**

Emergency evacuation times may be predicted for a facility. Location information may be captured for each of a plurality of people within the facility and one or more historical movement patterns of one or more of the plurality of people associated with the facility may be identified based at least in part on the captured location information. One or more predefined evacuation routes may be identified for the facility. The emergency evacuation time for evacuating the facility using the one or more predefined evacuation routes in response to an evacuation event may be predicted based at least in part on the one or more historical movement patterns of one or more of the plurality of people associated with the facility.

## Description

### TECHNICAL FIELD

The present disclosure relates generally to emergency evacuation of facilities, and more particular to methods and systems for improving emergency evacuation procedures for a facility.

### BACKGROUND

Emergency evacuations can occur at any time, and are essential for ensuring safety of facility occupants in an emergency. Conducting frequent fire drills, while beneficial for safety, can disrupt employees' work routines and erode their confidence. Traditional emergency evacuation training methods lack realism and fail to incorporate critical access control data, resulting in suboptimal evacuation plans and longer evacuation times. In one example, imagine a scenario where an office facility's evacuation plan doesn't consider how employees typically move in the facility. This oversight could lead to inefficient evacuation routes resulting in increased evacuation times during a real emergency, potentially putting lives at risk.

Traditional emergency evacuation planning and training methods typically rely on static evacuation plans and live drills, which may not accurately simulate real-world scenarios if not planned with expected user behavior and availability. Moreover, conducting live drills can cause disruptions to regular operations of the facility, inconveniencing employees or occupants of the facility and potentially affecting productivity or daily routines. What would be desirable are systems and method for improving evacuation plans of a facility to reduce evacuation times, avoid overcrowding during live drills, account for holidays, personnel availability and status of exit doors, and reducing the impact on daily workflows of occupants of the facility.

### SUMMARY

The present disclosure relates generally to emergency evacuation of facilities, and more particular to methods and systems for improving emergency evacuation procedures for a facility. In some cases, the present disclosure provides a solution that leverages access control data captured by an access control system of a facility. This access control data may be used to model the behavior of occupants in the facility under various circumstances such as under an evacuation event to create a reliable emergency evacuation visualization that is useful for improve emergency evacuation procedures for evacuating the facility.

An example may be found in a method of predicting an emergency evacuation time of a facility. The illustrative method includes capturing location information in a facility of each of a plurality of people associated with the facility and identifying one or more historical movement patterns of one or more of the plurality of people associated with the facility based at least in part on the captured location information. One or more predefined evacuation routes are identified for the facility. These predefined evacuation routes may be automatically generated or manually defined. The method includes predicting the emergency evacuation time for evacuating the facility using the one or more predefined evacuation routes in response to an evacuation event based at least in part on the one or more historical movement patterns of one or more of the plurality of people associated with the facility. In some cases, the predefined evacuation routes may be modified, resulting in one or more modified evacuation routes. Then, based at least in part on the historical behavioral patterns, the method may predict an evacuation time for evacuating the facility using the one or more modified evacuation routes. This may be repeated until a desired predicted evacuation time is reached.

In some cases, an evacuation drill may be initiated using an evacuation route that is predicted to achieve the desired evacuation time. Location information of each of the one or more people in the facility may be captured during the evacuation drill using the access control system of the facility. The location information captured during the evacuation drill may be used as feedback to enhance the model, resulting in more accurate subsequent predictions of the evacuation times for evacuating the facility.

In some cases, the location information of each of the plurality of people in the facility may continue to be captured over time, resulting in updated location information. Updated historical behavioral patterns of people in the facility may be determined based at least in part on the updated historical behavioral patterns. With this, an updated evacuation time may be predicted for evacuating the facility using the one or more evacuation routes. If the updated evacuation time does not meet desired predicted evacuation time, different evacuation routes may be defined and a corresponding evacuation time may be predicted for each subsequent evacuation route using the updated historical behavioral patterns until the desired predicted evacuation time is reached.

Another example may be found in an emergency evacuation prediction system for a facility. The emergency evacuation prediction facility includes an access control system for capturing location information of each of a plurality of people associated with the facility and a controller that is operatively coupled to the access control system. The controller is configured to identify one or more historical movement patterns of one or more of the plurality of people associated with the facility based at least in part on the captured location information, and to predict an emergency evacuation time for evacuating the facility using one or more predefined evacuation routes based at least in part on the one or more historical movement patterns of one or more of the plurality of people associated with the facility.

Another example may be found in a non-transitory computer readable medium storing instructions thereon. When the instructions are executed by one or more processors, the one or more processors are caused to receive location information in a facility of each of a plurality of people associated with the facility and to identify one or more historical movement patterns of one or more of the plurality of people associated with the facility based at least in part on the captured location information. The one or more processors are caused to predict an emergency evacuation time for evacuating the facility using one or more predefined evacuation routes based at least in part on the one or more historical movement patterns of one or more of the plurality of people associated with the facility.

The preceding summary is provided to facilitate an understanding of some of the innovative features unique to the present disclosure and is not intended to be a full description. A full appreciation of the disclosure can be gained by taking the entire specification, claims, figures, and abstract as a whole.

### BRIEF DESCRIPTION OF THE FIGURES

The disclosure may be more completely understood in consideration of the following description of various examples in connection with the accompanying drawings, in which:
Figure 1 is a schematic block diagram showing an illustrative emergency evacuation prediction system that may form part of a building management system;
Figure 2 is a flow diagram showing an illustrative method of predicting an emergency evacuation time of a facility;
Figure 3 is a flow diagram showing an illustrative method of predicting an emergency evacuation time of a facility;
Figure 4 is a flow diagram showing an illustrative series of steps that may be carried out by one or more processors executing executable instructions; and
Figure 5 is a flow diagram providing an illustrative overview.

While the disclosure is amenable to various modifications and alternative forms, specifics thereof have been shown by way of example in the drawings and will be described in detail. It should be understood, however, that the intention is not to limit the disclosure to the particular examples described. On the contrary, the intention is to cover all modifications, equivalents, and alternatives falling within the spirit and scope of the disclosure.

### DESCRIPTION

The following description should be read with reference to the drawings, in which like elements in different drawings are numbered in like fashion. The drawings, which are not necessarily to scale, depict examples that are not intended to limit the scope of the disclosure. Although examples are illustrated for the various elements, those skilled in the art will recognize that many of the examples provided have suitable alternatives that may be utilized.

All numbers are herein assumed to be modified by the term "about", unless the content clearly dictates otherwise. The recitation of numerical ranges by endpoints includes all numbers subsumed within that range (e.g., 1 to 5 includes 1, 1.5, 2, 2.75, 3, 3.80, 4, and 5).

As used in this specification and the appended claims, the singular forms "a", "an", and "the" include the plural referents unless the content clearly dictates otherwise. As used in this specification and the appended claims, the term "or" is generally employed in its sense including "and/or" unless the content clearly dictates otherwise.

It is noted that references in the specification to "an embodiment", "some embodiments", "other embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is contemplated that the feature, structure, or characteristic may be applied to other embodiments whether or not explicitly described unless clearly stated to the contrary.

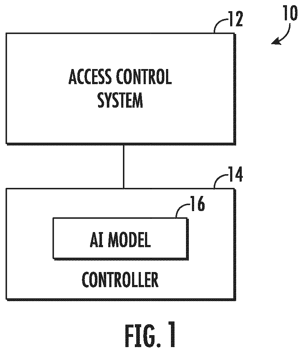

Figure 1 is a schematic block diagram showing an illustrative emergency evacuation prediction system 10 for a facility. The emergency evacuation prediction system 10 may be part of a building management system, such as an access control system of a facility, but this is not required. In the example shown, the emergency evacuation prediction system 10 includes an access control system 12 that is configured to capture location information of each of a plurality of people associated with the facility. In some cases, the location information for each of the plurality of people associated with the facility may include access control data from the access control system 12. In some cases, the access control data may include one or more of (or even all of) a person identifier, an access event time and an access location for each person that passes through an access control point of the access control system 12.

In some cases, the access control system 12 may include a number of access card readers that are associated with each of a variety of doors distributed about the facility. As people use their access cards to gain access through particular doors, and thus move about the facility, the access control system 12 is able to track where at least most of the people are at any given time. Moreover, the access control system 12 is able to provide historical data regarding people's movement, such as where were people located, and at what time, during a previous time period such as last hour, last day, last week, and so on. In some cases, the access cards may be physical access cards that are swiped against a card reader, while in other cases the access cards may be electronic access cards such as RFID tags, Bluetooth devices, mobile phones or the like that can provide frictionless access through an access control point of the facility. In some cases, the access control system 12 may include video cameras and video analytics algorithms to identify and track people as they move around the facility. These are just examples.

The illustrative emergency evacuation prediction system 10 also includes a controller 14 that is operatively coupled to the access control system 12. The controller 14 is configured to identify one or more historical movement patterns of one or more of the plurality of people associated with the facility based at least in part on the captured location information, and to predict an emergency evacuation time for evacuating the facility using one or more predefined evacuation routes based at least in part on the one or more historical movement patterns of one or more of the plurality of people associated with the facility. In some cases, the controller 14 may be configured to identify which of the plurality of people associated with the facility are currently in the facility and to predict the emergency evacuation time for evacuating the facility using the one or more predefined evacuation routes based at least in part on the one or more historical movement patterns of the people that are identified as being currently in the facility.

In some cases, the controller 14 includes an AI (artificial intelligence) model 16 for predicting the emergency evacuation time. In some cases, the AI model 16 may be a trained AI model. In some instances, the controller 14 may be configured to process at least part on the captured location information using the AI model 16 to identify the predicted emergency evacuation time based on the historical location information and the one or more predefined evacuation routes. In some cases, the controller 14 may be configured to train the AI model 16 to account for the number and location of the people in the facility along with crowd dynamics in the facility.

In some instances, the controller 14 may receive one or more modified evacuation routes from a user, or may automatically derive one or more modified evacuation routes, and based at least in part on the historical behavioral patterns, predict an evacuation time for evacuating the facility using the one or more modified evacuation routes. In some cases, the controller 14 may automatically derive a plurality of modified evacuation routes and predict a corresponding evacuation time for each of the plurality of modified evacuation routes as part of a Monte Carlo simulation to determine an optimal modified evacuation route.

To help increase the accuracy of the model, an evacuation drill may be initiated. The controller 14 may capture location information of each of a plurality of people in the facility during the evacuation drill and to use the location information captured during the evacuation drill as feedback to enhance the model to improve subsequent predictions of the evacuation time for evacuating the facility. In some cases, the controller 14 may be configured to continue to capture location information of each of a plurality of people in a facility over time, resulting in updated location information. The controller 14 may be configured to identify updated historical behavioral patterns of people in the facility based at least in part on the updated location information and, based at least in part on the updated historical behavioral patterns, predict an updated evacuation time for evacuating the facility using the one or more evacuation routes.

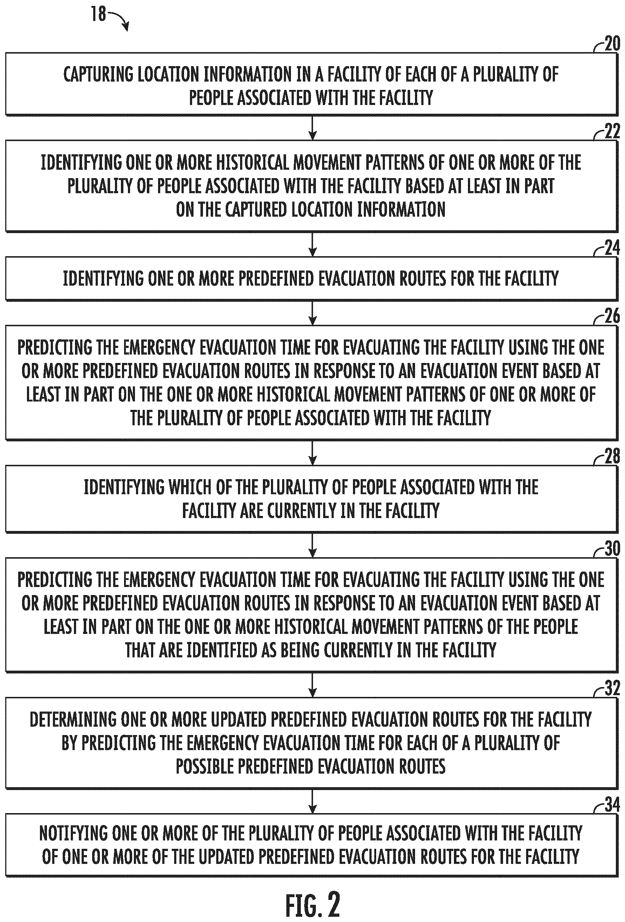

Figure 2 is a flow diagram showing an illustrative method 18 of predicting an emergency evacuation time of a facility. The method 18 includes capturing location information in a facility of each of a plurality of people associated with the facility, as indicated at block 20. In some cases, the location information of each of the plurality of people associated with the facility may include entry and exit times at preferred access points of the facility. In some cases, the location information may include access control data collected by an access control system of the facility. As an example, the access control data may include a person identifier, an access event time and an access location for each person that passes through an access control point of the access control system. In some cases, capturing location information of each of the plurality of people associated with the facility may include capturing location information of two or more of the plurality of people associated with the facility during one or more previous evacuation events, and wherein at least one of the historical movement patterns may be based at least in part on the location information captured during the one or more previous evacuation events.

One or more historical movement patterns of one or more of the plurality of people associated with the facility are identified based at least in part on the captured location information, as indicated at block 22. One or more predefined evacuation routes are identified for the facility, as indicated at block 24. An emergency evacuation time for evacuating the facility using the one or more predefined evacuation routes in response to an evacuation event is predicted based at least in part on the one or more historical movement patterns of one or more of the plurality of people associated with the facility, as indicated at block 26.

In some cases, the method 18 may include identifying which of the plurality of people associated with the facility are currently in the facility, as indicated at block 28. The method 18 may include predicting the emergency evacuation time for evacuating the facility using the one or more predefined evacuation routes in response to an evacuation event based at least in part on the one or more historical movement patterns of the people that are identified as being currently in the facility, as indicated at block 30. In some cases, the method 18 may include determining one or more updated predefined evacuation routes for the facility by predicting the emergency evacuation time for each of a plurality of possible predefined evacuation routes, as indicated at block 32. In some cases, the method 18 may further include notifying one or more of the plurality of people associated with the facility of one or more of the updated predefined evacuation routes for the facility, as indicated at block 34.

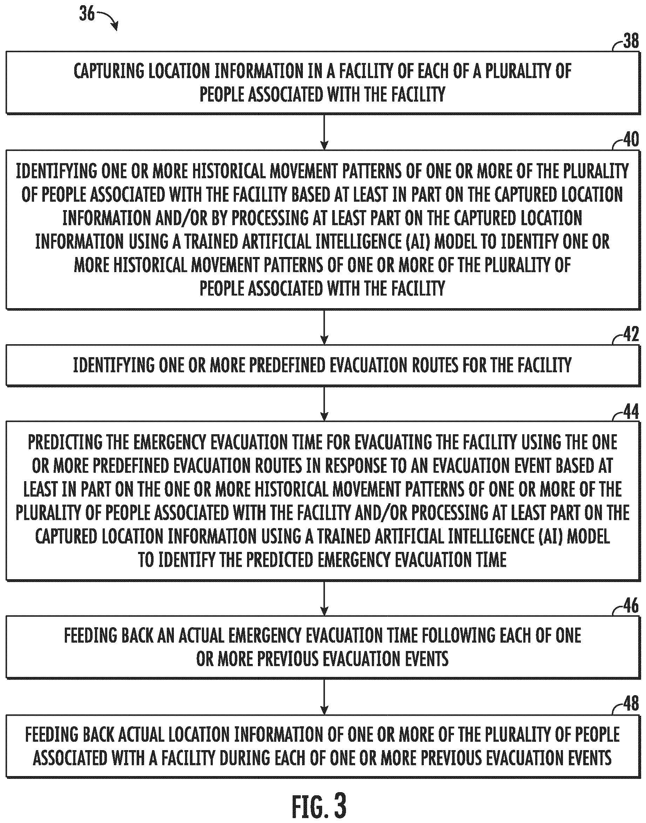

Figure 3 is a flow diagram showing an illustrative method 36 of predicting an emergency evacuation time of a facility. The method 36 includes capturing location information in a facility of each of a plurality of people associated with the facility, as indicated at block 38. In some cases, the location information of each of the plurality of people associated with the facility may include entry and exit times at preferred access points of the facility. In some cases, the location information may include access control data collected by an access control system of the facility. As an example, the access control data may include a person identifier, an access event time and an access location for each person that passes through an access control point of the access control system. In some cases, capturing location information of each of the plurality of people associated with the facility may include capturing location information of two or more of the plurality of people associated with the facility during one or more previous evacuation events, and wherein at least one of the historical movement patterns may be based at least in part on the location information captured during the one or more previous evacuation events.

One or more historical movement patterns of one or more of the plurality of people associated with the facility are identified based at least in part on the captured location information and/or by processing at least part on the captured location information using a trained Artificial Intelligence (AI) model to identify one or more historical movement patterns of one or more of the plurality of people associated with the facility, as indicated at block 40.

One or more predefined evacuation routes are identified for the facility, as indicated at block 42. The emergency evacuation time for evacuating the facility using the one or more predefined evacuation routes in response to an evacuation event is predicted based at least in part on the one or more historical movement patterns of one or more of the plurality of people associated with the facility and/or processing at least part on the captured location information using a trained Artificial Intelligence (AI) model to identify the predicted emergency evacuation time, as indicated at block 44. In some cases, the trained AI model may be trained to account for a number and location of people in the facility at the time of the evacuation event, and crowd dynamics in the particular facility. In some case, a floorplan of the facility may be provided to the AI model, and the historical movement patterns may be expressed relative to the floorplan, to provide spatial awareness to the trained AI Model. The floor plan may include door locations, hallway locations, room locations, possible congestion locations, etc. In some cases, the number and location of people in the facility may be based at least in part on one or more of the historical movement patterns of people in the facility. In some cases, the number and location of people in the facility may be based at least in part on real time location data collected by an access control system of the facility.

In some cases, the method 36 may include training the AI model by feeding back an actual emergency evacuation time following each of one or more previous evacuation events, as indicated at block 46. In some cases, the method 36 may further include feeding back actual location information of one or more of the plurality of people associated with a facility during each of one or more previous evacuation events, as indicated at block 48. This may help increase the accuracy of the AI model over time in predicting future evacuation times.

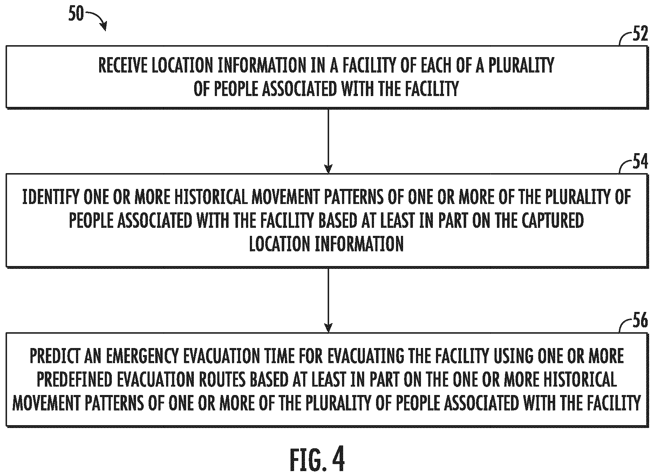

Figure 4 is a flow diagram showing an illustrative series of steps that may be carried out by one or more processors executing executable instructions that are stored on a non-transitory computer readable storage medium. The one or more processors may be part of the controller 14, for example. When the one or more processors execute the instructions, the one or more processors are caused to receive location information in a facility of each of a plurality of people associated with the facility, as indicated at block 52. In some cases, the location information may include access control data collected by an access control system of the facility. The one or more processors are caused to identify one or more historical movement patterns of one or more of the plurality of people associated with the facility based at least in part on the captured location information, as indicated at block 54. The one or more processors are caused to predict an emergency evacuation time for evacuating the facility using one or more predefined evacuation routes based at least in part on the one or more historical movement patterns of one or more of the plurality of people associated with the facility, as indicated at block 56.

In some cases, the predefined evacuation routes may be modified, resulting in one or more modified evacuation routes. Then, based at least in part on the historical behavioral patterns, the one or more processors may predict an evacuation time for evacuating the facility using the one or more modified evacuation routes. This may be repeated until a desired predicted evacuation time is reached.

In some cases, an evacuation drill may be initiated using an evacuation route that is predicted to achieve the desired evacuation time. Location information of each of the one or more people in the facility may be captured during the evacuation drill using the access control system of the facility. The location information captured during the evacuation drill may be used as feedback to enhance the model, resulting in more accurate subsequent predictions of the evacuation times for evacuating the facility.

In some cases, the location information of each of the plurality of people in the facility may continue to be captured over time, resulting in updated location information. Updated historical behavioral patterns of people in the facility may be determined based at least in part on the updated historical behavioral patterns. With this, an updated evacuation time may be predicted for evacuating the facility using the one or more evacuation routes. If the updated evacuation time does not meet desired predicted evacuation time, different evacuation routes may be defined and a corresponding evacuation time may be predicted for each subsequent evacuation route using the updated historical behavioral patterns until the desired predicted evacuation time is reached.

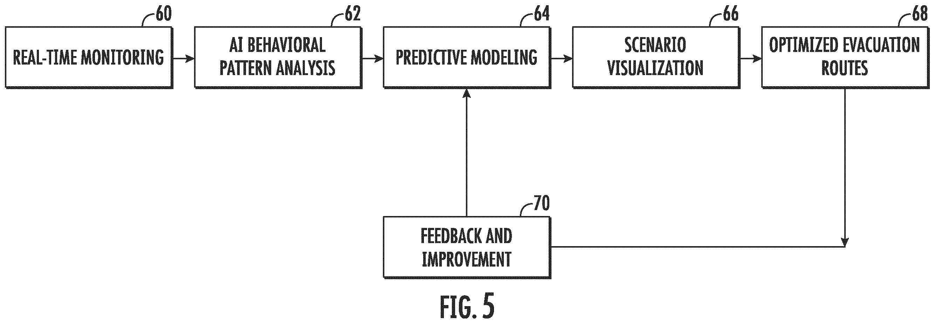

Figure 5 is a flow diagram showing an illustrative overview 58. The overview 58 begins with a real-time monitoring block 60. In some cases, the real-time monitoring includes integration with a building's access control system in order to obtain access control event data. This enables real-time monitoring of employee movements during normal operations of the facility as well as during evacuation events. This data may include entry and exit times, preferred or usual access points, crowd distribution, etc. This data may be obtained using security cameras, access card data, mobile devices, manually entered data, and/or other sensor data that can track employee location and movement. The overview 58 includes an AI behavior pattern analysis block 62. The AI behavior pattern analysis block 62 may include analyzing the historical behavioral pattern of employees during both normal and emergency evacuations using a trained AI model. In normal evacuations, the AI behavior pattern analysis block 62 may analyze employee access logs and events to extract data such as time, frequency, and locations of access attempts in order to identify behavior patterns sometimes of each individual employee. Data from previous evacuation events (e.g. fire drills, bomb threats, tornado drills, etc.), if available, may also be used to better understand for each employee their typically response to alarms and how they navigate through the building during evacuations.

The overview 58 includes a predictive modeling block 64. Predictive modeling includes using an AI model to predict likely evacuation paths, times and/or potential congestion points, based at least in part on the historical behavioral patterns. This can help in optimizing evacuation routes and reducing evacuation times. The overview 58 includes a scenario visualization block 66. Scenario visualization block 66 includes simulating different emergency scenarios prior to actually conducting an actual evacuation event (e.g. fire drill). These simulations may be based on scenarios developed by the predictive modeling block 64, and may consider various factors such as holidays, personnel availability, and the status of various doors (locked or unlocked, blocked by a fire, etc.). This can help provide insight into potential issues like overcrowding and congestion, which can help in planning more effective evacuation routes.

The overview 58 includes an optimized evacuation routes block 68. Optimized evacuation routes define an optimized evacuation route. In some cases, the system may receive one or more modified evacuation routes from a user, or may automatically derive one or more modified evacuation routes. To automatically derive an optimized modified evacuation route, the optimized evacuation routes block 68 may use a trained AI Model to determine the optimized modified evacuation route. Alternatively, or in addition, the optimized evacuation routes block 68 may predict an evacuation time for evacuating the facility using each of a plurality of modified evacuation routes as part of a Monte Carlo simulation, and identify the modified evacuation route that has the lowest evacuation time.

The overview 58 includes a feedback and improvement block 70. Feedback may be collected about the location and/or behavior of each occupant during an actual evacuation drill. The feedback may be used to improve the accuracy of predictive models (e.g. AI model) as well as the overall effectiveness of the evacuation process.

In some cases, the optimized evacuation route may change depending on the current conditions associated with the building. For example, the optimized evacuation route may change depending on the number of people in the building, the distribution of the people in the building, the particular people that are in the building, the particular access doors that are available, the location of the emergency event (i.e. location of a fire) in the building, etc. In some cases, digital signage may be provided throughout the building that provides the occupants of the building with the current optimized evacuation route. In addition, or alternatively, the current optimized evacuation route may be sent directly to each occupant's mobile phone. In some cases, the current optimized evacuation route sent to a first occupant of the building may be different from the current optimized evacuation route sent to a second occupant of the building, depending on the relative locations of the first occupant and the second occupant in the building when the evacuation event is raised.

Having thus described several illustrative embodiments of the present disclosure, those of skill in the art will readily appreciate that yet other embodiments may be made and used within the scope of the claims hereto attached. It will be understood, however, that this disclosure is, in many respects, only illustrative. Changes may be made in details, particularly in matters of shape, size, arrangement of parts, and exclusion and order of steps, without exceeding the scope of the disclosure. The disclosure's scope is, of course, defined in the language in which the appended claims are expressed.

## Claims

1. A method of predicting an emergency evacuation time of a facility, comprising:
capturing location information in a facility of each of a plurality of people associated with the facility;
identifying one or more historical movement patterns of one or more of the plurality of people associated with the facility based at least in part on the captured location information;
identifying one or more predefined evacuation routes for the facility; and
predicting the emergency evacuation time for evacuating the facility using the one or more predefined evacuation routes in response to an evacuation event based at least in part on the one or more historical movement patterns of one or more of the plurality of people associated with the facility.

2. The method of claim 1, wherein the location information comprises access control data collected by an access control system of the facility.

3. The method of claim 2, wherein the access control data comprises a person identifier, an access event time and an access location for each person that passes through an access control point of the access control system.

4. The method of claim 1, comprising:
identifying which of the plurality of people associated with the facility are currently in the facility; and
predicting the emergency evacuation time for evacuating the facility using the one or more predefined evacuation routes in response to an evacuation event based at least in part on the one or more historical movement patterns of the people that are identified as being currently in the facility.

5. The method of claim 1, wherein capturing location information of each of the plurality of people associated with the facility comprises capturing location information of two or more of the plurality of people associated with the facility during one or more previous evacuation events, and wherein at least one of the historical movement patterns is based at least in part on the location information captured during the one or more previous evacuation events.

6. The method of claim 1, wherein predicting the emergency evacuation time for evacuating people from the facility during the evacuation event comprises processing at least part on the captured location information using a trained Artificial Intelligence (AI) model to identify the predicted emergency evacuation time.

7. The method of claim 6, wherein the trained AI model is trained to account for a number and location of people in the facility at the time of the evacuation event and crowd dynamics in the facility.

8. The method of claim 7, wherein the number and location of people in the facility is based at least in part on one or more of the historical movement patterns of people in the facility.

9. The method of claim 7, wherein the number and location of people in the facility is based at least in part on real time location data collected by an access control system of the facility.

10. The method of claim 6, comprising training the AI model by one or more of:
feeding back an actual emergency evacuation time following each of one or more previous evacuation events; and
feeding back actual location information of one or more of the plurality of people associated with a facility during each of one or more previous evacuation events.

11. The method of claim 1, wherein the location information of each of the plurality of people associated with the facility include entry and exit times at preferred access points of the facility.

12. The method of claim 1, wherein identifying one or more historical movement patterns of one or more of the plurality of people associated with the facility comprises processing at least part on the captured location information using a trained Artificial Intelligence (AI) model to identify one or more historical movement patterns of one or more of the plurality of people associated with the facility.

13. The method of claim 1, comprising:
determining one or more updated predefined evacuation routes for the facility by predicting the emergency evacuation time for each of a plurality of possible predefined evacuation routes.

14. The method of claim 13, comprising:
notifying one or more of the plurality of people associated with the facility of one or more of the updated predefined evacuation routes for the facility.

15. An emergency evacuation prediction system for a facility, comprising:
an access control system for capturing location information of each of a plurality of people associated with the facility;
a controller operatively coupled to the access control system, the controller configured to:
identify one or more historical movement patterns of one or more of the plurality of people associated with the facility based at least in part on the captured location information; and
predict an emergency evacuation time for evacuating the facility using one or more predefined evacuation routes based at least in part on the one or more historical movement patterns of one or more of the plurality of people associated with the facility.
